# EUROPEAN PATENT APPLICATION

(11) **EP 2 112 584 A1**
(43) Date of publication of application: **28.10.2009**
(21) Application number: 09158336.9
(22) Date of filing: 21.04.2009
(51) Int. Cl.: G06F 3/048

(54) **Operating method, system and stroage device using the same**

(30) Priority: 21.04.2008 TW 97114584
(71) Applicant: HTC Corporation, Taoyuan County 330 (TW)
(72) Inventor: Wang, John C., Taoyan City Taoyuan County 330 (TW)
(74) Representative: Becker Kurig Straus

(57) **Abstract**

An operating method and system and a storage medium using the same are provided. The operating method is applied to a handheld electronic device with at least two judging modes. First, the handheld electronic device receives a touch input, and determines a judging mode out of the judging modes according to a parameter related to the touch input. Then, the touch input is compared with a reference signal to obtain a deviation value. When the deviation value is smaller than the deviation threshold corresponding to the determined judging mode, an operation corresponding to the touch input is executed.

## Description

### BACKGROUND OF THE INVENTION

In order to reduce volume and weight, the handheld electronic device on the market utilizes the touch screen as an input tool. The user can use fingers or styluses to operate the handheld electronic device. For example, a handheld electronic device detects the movement of a finger or a stylus on the touch screen to pan or scroll the screen display of the document, such as picture, photo, web-page, list or menu.

In some cases, the user only wants to move the screen display upward and downward, so the user has to moves the finger or stylus on the touch screen vertically. However, it is difficult to keep moving the finger or stylus along a vertical line on the touch screen, and the path of movement of the finger or stylus of the user usually comes out a curve line. Accordingly, the handheld electronic device will move the screen display not only vertically but horizontally.

To solve this problem, in some operating modes, if the path of the touch input deviates from a vertical line, the handheld device judges the touch input signal as an erroneous signal. For example, when the handheld electronic device receives a touch input with an upward vertical path, the touch input signal is judged as an upward signal and the screen display is moved upward. Once the path of the touch input deviates from the straight line, the touch input signal is judged as an erroneous signal and the screen display is not moved anymore. Though this method can prevent the screen display from being moved horizontally, it is still difficult to move the screen display vertically.

### SUMMARY OF THE INVENTION

In light of the above, the present application provides an operating method that prevents a handheld electronic device from misjudging the touch input of the user, thereby making the user operate the handheld electronic device more smoothly.

The present application provides an operating method applied to a handheld electronic device having at least two judging modes. The operating method includes: receiving a touch input; determining a judging mode out of the judging modes according to a parameter related to the touch input; calculating a deviation value between the touch input and a reference signal; judging whether the deviation value is smaller than a deviation threshold corresponding to the determined judging mode; and when the deviation value is smaller than the deviation threshold, executing an operation corresponding to the touch input.

The present application also provides an operating system suitable for a handheld electronic device having at least two judging modes. The operating system includes a receiving module, an executing module, a calculating module and a judging mode. The receiving module receives a touch input. The executing module determines a judging mode out of the judging modes according to a parameter related to the touch input. The calculating module calculates a deviation value between the touch input and a reference signal. The judging module judges whether the deviation value is smaller than a deviation threshold corresponding to the determined judging mode. When the judging module judges the deviation value is smaller than the deviation threshold, the executing module executes an operation corresponding to the touch input.

From another point of view, the present application provides a storage medium used for storing a computer program. The computer program includes a plurality of codes that may be loaded into the handheld electronic device and enable the handheld electronic device to execute the aforesaid operating method.

In order to make the aforementioned and other objects, features and advantages of the present application more comprehensible, several embodiments accompanied with figures are described in detail below.

### BRIEF DESCRIPTION OF THE DRAWINGS

FIG. 1 is a flowchart showing an operating method according to an embodiment of the present application.

FIG. 2 is a flowchart showing an operating method according to another embodiment of the present application.

FIG. 3a is a diagram showing an exemplary of a touch input on a touch screen.

FIG. 3b is a diagram showing the horizontal distance between the touch input shown in FIG. 3a and a vertical line as the lasting time of the touch input increases.

FIG. 3c is a diagram showing another exemplary of a touch input on a touch screen.

FIG. 3d is a diagram showing the horizontal distance between the touch input shown in FIG. 3c and a vertical line as the lasting time of the touch input increases.

FIG. 4 is a block diagram showing an operating system according to an embodiment of the present application.

### DESCRIPTION OF EMBODIMENTS

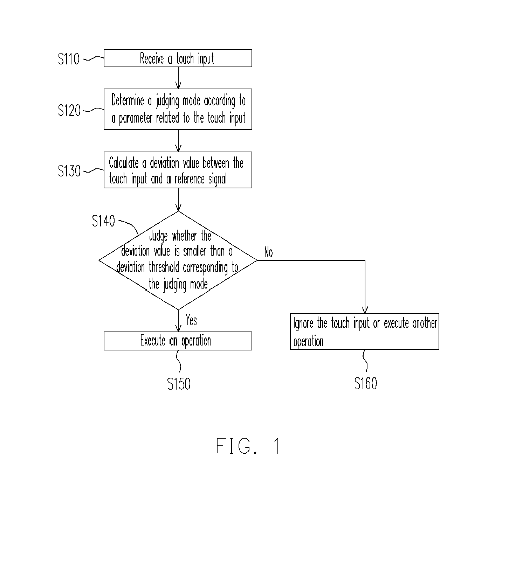

FIG. 1 is a flowchart showing an operating method according to an embodiment of the present application. The embodiment is applied to a handheld electronic device with a touch screen, such as a person digital assistant (PDA), a PDA phone or a touch phone; however, this is not a limitation of the present application.

Please refer to FIG. 1. In step S110, a touch input is received. The touch input is generated from the user, for example, by sliding a finger or a stylus on the touch screen. Next, in step S120, a judging mode is determined according to a parameter related to the touch input. The parameter can be a lasting time, a path, a displacement, a speed or an operating mode related to the touch input. Next, in step S 130, a deviation value between the touch input and a reference signal is calculated. The reference signal can be a straight line (e.g., a vertical or horizontal line) or a specific path (e.g., a circular path), and the deviation value can be a distance or an angle between the touch input and a straight line (e.g., a horizontal distance between the touch input and a vertical line, or an angle between the tangent of the touch input and a vertical line), a resemblance between the touch input and a circular path. Next, in step S 140, whether the deviation value is smaller than a deviation threshold corresponding to the judging mode is judged.

For example, the parameter is the lasting time ofthe touch input; the reference signal is a vertical line; and the deviation value is the horizontal distance between the touch input and the vertical line. In other words, the current judging mode is determined according to the lasting time ofthe touch input. In different judging modes, different deviation thresholds are used to compare with the horizontal distance between the touch input and the vertical line.

For another example, the parameter is the displacement of the touch input; the reference signal is a horizontal line; and the deviation value is the angle between the tangent of the touch input and the vertical line. In other words, the current judging mode is determined according to the displacement of the touch input. In different judging modes, different deviation thresholds are used to compare with the angle between the tangent of the touch input and the vertical line.

For further another example, the parameter is the operating mode related to the touch input (e.g., the software environment, the operating environment or the user interface environment); the reference signal has a circular path; and the deviation value is the resemblance between the touch input and a circular path. In other words, the current judging mode is determined according to operating mode related to the touch input. In different judging modes, different deviation thresholds are used to compare with the resemblance between the touch input and a circular path.

Please refer to FIG. 1 again. In step S140, if the deviation value is judged smaller than the deviation threshold, then in step S150, the handheld electronic device executes an operation. On the other hand, if the deviation value is judged greater than the deviation threshold, then in step S160, the handheld electronic device executes another operation or ignores the touch input. In addition, if the deviation value is judged equal to the deviation threshold, then step S150 or S160 is alternative depending on design requirements.

In one embodiment of the present application, the operating method is applied to browsing a list (e.g., a contact list, a file list or a song list ) displayed on the touch screen of a handheld electronic device. In this embodiment, there are two different judging modes. The judging mode is determined by the lasting time of the touch input.
The reference signal is a vertical line, and the deviation value is the horizontal distance between the touch input and the vertical line. In different judging modes, different deviation thresholds are used to compare with the deviation value. When the lasting time of the touch input is in a time range T1, a horizontal distance L1 is used to compare with the deviation value. On the other hand, when the lasting time of the touch input is in a time range T2, a horizontal distance L2 is used to compare with the deviation value.

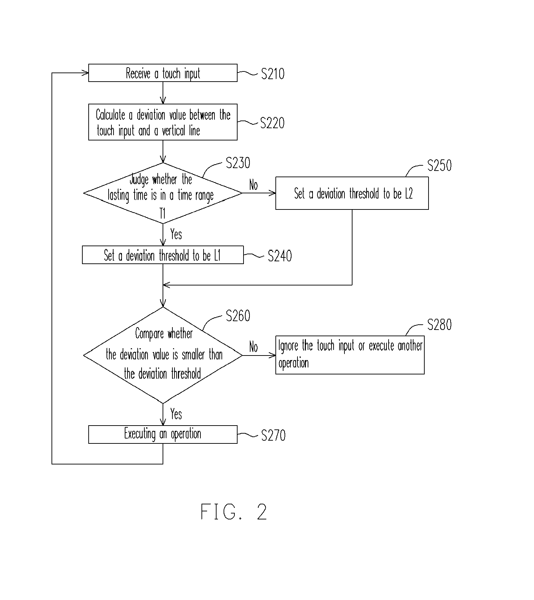

FIG. 2 is a flowchart showing an operating method according to the present embodiment of the present application. When the user moves the finger on the touch screen to scroll a list, the handheld electronic device receives a touch input (S210). Next, a horizontal distance between the touch input and a vertical line is calculated and used as a deviation value (S220). Next, whether the lasting time of the touch input is in the time range T1 is judged (S230). If the lasting time of the touch input is in the time range T1, the deviation threshold is set to be L1 (S240); otherwise, if the lasting time of the touch input is within the time range T2, the deviation threshold is set to be L2 (S250). Next, whether the deviation value is smaller than the deviation threshold (L1 or L2) is judged (S260).

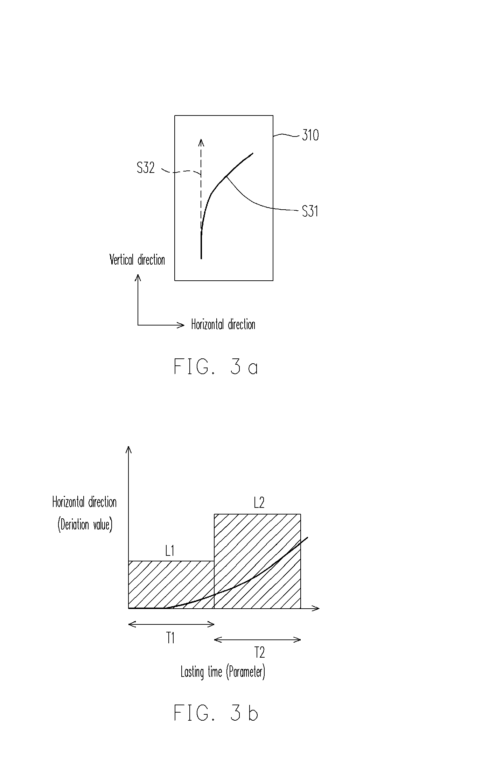

For example, FIG. 3a is a diagram showing an exemplary path of a touch input S31 on the touch screen 310, and FIG. 3b is a diagram showing the horizontal distance between the touch input S31 and the vertical line S32 as the lasting time of the touch input S31 increases. As shown in FIG. 3a and 3b, the touch input S31 does not deviate from the vertical line S32 too far in the beginning, and the deviation value does not exceed the deviation threshold L1 in the time range T1. Thus, the handheld electronic device executes an operation to scroll the list (S270). In the time range T2, tough the touch input S31 deviates from the vertical line S32 much more and the deviation value is getting greater, the deviation value still does not exceed the deviation threshold L2 because the deviation threshold L2 in the time range T2 is larger than the deviation threshold L1 in the time range T1. Thus, the handheld electronic device still executes the operation to scroll the list continually(S270).

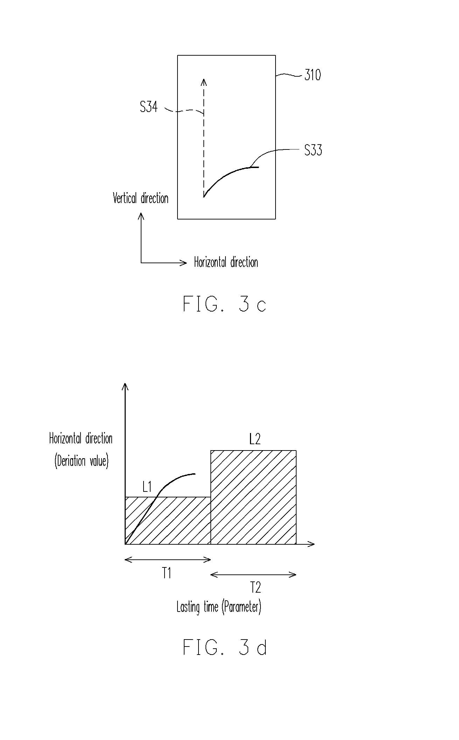

For another example, FIG. 3c shows another exemplary path of a touch input S33 on the touch screen 310, and FIG. 3d shows the horizontal distance between the touch input S33 and the vertical line S34 as the lasting time of the touch input S33 increases. As shown in FIG. 3c and 3d, the touch input S33 deviates far from the vertical line S34 in the beginning, so the deviation value exceeds the deviation threshold L1 in the time range T1. Thus, the handheld electronic device does not execute the operation to scroll the list but executes another operation or ignores the touch input (S280). According to the present application, even if the path of the touch input is not a vertical line, the handheld electronic device can judge the touch input as an upward signal and scroll the list. In addition, the handheld electronic device does not misjudge an accidental touch input with oblique path as an upward signal to start scrolling the web-page.

According to another embodiment, there can also be another time range T3 after the time range T2. Similarly, in the time range T3, there is a corresponding judging mode with a deviation threshold L3, which may be greater or smaller than the deviation threshold L2.

According to another embodiment, the deviation threshold L2 of the judging mode in the time rage T2 can be ignored. In other words, once the handheld electronic device judges the deviation value is smaller than the deviation threshold T1 and scrolls the list in the time range T1, no matter how much the horizontal distance of the deviation value is, the handheld electronic device scrolls the list continually.

In the above embodiment, T1 and T2 represent different time ranges for the lasting time of the touch input, while in other embodiments, T1 and T2 can represent respectively specific time points after the touch input has been received. For example, if the lasting time of the touch input is before the time point T1, the deviation threshold L1 is used to compare with the touch input; if the lasting time of the touch input is between time points T1 and T2, the deviation threshold L2 is used to compare with the touch input; and if the lasting time of the touch input is after T2, the deviation threshold L3 is used to compare with the touch input.

In another embodiment of the present application, the operating method is applied to browsing a web-page or a document (e.g., a WORD or PDF document) displayed on the touch screen of a handheld electronic device. In this embodiment, the handheld electronic device has a reading mode for browsing web-pages. In the reading mode, the handheld device readjusts the width of the web-page to be equal to or close to the width of the touch screen, so the user can simply pan the web-page vertically like scrolling the list to see the whole web-page. Thus, the above-mentioned operating method to browse the list can be applied to browsing the web-page in the reading mode.

In the present embodiment, the deviation value is the horizontal distance between the touch input and the vertical line. Thus, when the touch input switches from upward to downward and the deviation value does not exceed the deviation threshold, the handheld electronic device will execute an operation to pan the web-page upward. Hence, when panning the web-page upward, the user can change to pan the web-page downward at any time.

In other embodiments, the above parameter may represent different operating modes, such as different software environments, different operating environments or different user interface environments. For example, the handheld electronic device has two modes for browsing web-pages, including a preview mode and a theme reading mode. The preview mode and the theme read mode correspond to different judging modes respectively.

When the handheld electronic device operates in the theme reading mode, the width of a selected part of the web-page, for example, a block of an article is readjusted to be close to that of the touch screen. However, the length of the web-page may be greater than that of the touch screen, so the user has to move the block of the article vertically on the touch screen to see the whole block of the article. According to the present embodiment, in the judging mode corresponding to the theme reading mode, if the angle between the path of a touch input and a vertical straight line (i.e., a deviation value) is smaller than a threshold angle (i.e., a deviation threshold), the handheld electronic device scrolls the block of the article vertically. On the other hand, if the angle between the path of the touch input and the vertical straight line is greater than the threshold angle, the handheld electronic device ignores the touch input and does not move the web-page. Thus, the user can only move the web-page vertically in the theme reading mode.

On the other hand, when the handheld electronic device operates in the preview mode, a whole web-page can be browsed. However, both the width and length of the web-page usually exceed those of the touch screen in the preview mode, so the user has to move the web-page upward, downward, leftward and rightward on the touch screen to see the whole web-page. According to the present embodiment, in the judging mode corresponding to the preview mod, the deviation angle (i.e., the deviation threshold) is ignored. Specifically speaking, the handheld electronic does not ignore the touch input and moves the web-page according to the path of the moving of the touch input on the touch screen. Thus, the user can move the web-page along any direction in the preview mode.

It should be noted that, the above operating method may be executed on any handheld electronic device that has a processor. In other words, the above embodiment may be designed as a computer program including a plurality of codes, and a storage medium (such as an optical disk, a floppy disk or a portable hard drive) is used to store the computer program, such that after the computer program is loaded into the handheld electronic device, the operating method according to the above embodiment may be executed on the handheld electronic device.

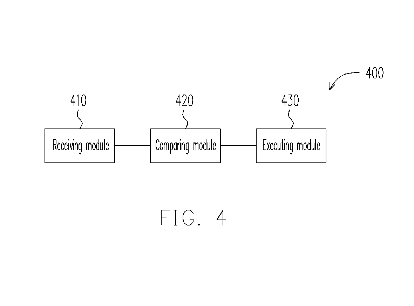

In order to enable those skilled in the art to implement the present application, an embodiment of a device of the present application is further provided in the following. FIG. 4 is a block diagram showing an operating system according to an embodiment of the present application. The present embodiment is also applied to a handheld electronic device with a touch screen. In addition, the handheld electronic device of the present embodiment has a plurality of judging modes, and the plurality of judging modes respectively correspond to a plurality of deviation thresholds.

Referring to FIG. 4, an operating system 400 includes a receiving module 410, a comparing module 420 and an executing module 430. First, the receiving module 410 receives a touch input via the touch screen. The comparing module 420 calculates a deviation value between the touch input and a reference signal. The reference signal and the deviation value are similar to those as described in the above embodiments, so further description is omitted.

The executing module 430 executes one of the judging modes according to a parameter related to the touch input. When the comparing module 420 determines that the deviation value is smaller than the deviation threshold corresponding to the executed judging mode, the executing module 430 executes an operation. On the other hand, when the comparing module 420 determines that the deviation value is greater than the deviation threshold corresponding to the executed judging mode, the executing module 430 ignores the touch input ofthe user or executes another operation. Since actions of each of components in the operating system 400 according to the present embodiment are similar to those in the above method embodiment, further description is thereby omitted.

In summary, the present application enables the handheld electronic device to adopt different judging methods when coping with different situations, and sets different deviation thresholds under different judging modes. Therefore, the present application can reduce the possibility of misjudging the operations of the user and make the user operate the handheld electronic device more smoothly.

Although the present application has been described with reference to the above embodiments, application of the present application is not limited to these embodiments. It will be apparent to one of the ordinary skill in the art that modifications to the described embodiment may be made without departing from the spirit of the invention. Accordingly, the scope of the invention will be defined by the attached claims not by the above detailed descriptions.

## Claims

1. An operating method, suitable for a handheld electronic device having at least two judging modes, comprising:
receiving a touch input;
determining a judging mode out of the judging modes according to a parameter related to the touch input;
calculating a deviation value between the touch input and a reference signal;
judging whether the deviation value is smaller than a deviation threshold corresponding to the determined judging mode; and
when the deviation value is smaller than the deviation threshold, executing an operation corresponding to the touch input.

2. The operating method of claim 1, further comprising:
when the deviation value is greater than the deviation threshold, ignoring the touch input.

3. The operating method of claim 1, further comprising:
when the deviation value is greater than the deviation threshold, executing another operation corresponding to the touch input.

4. The operating method of claim 1, wherein the deviation threshold is ignored in the determined judging mode.

5. The operating method of claim 1, wherein the parameter is a lasting time of the touch input, the reference signal is a vertical line, and the deviation value is a horizontal distance between the touch input and the vertical line.

6. The operating method of claim 1, wherein the parameter is a lasting time of the touch input, the reference signal is a vertical line, and the deviation value is an angle between the tangent of the touch input and the vertical line.

7. The operating method of claim 1, wherein the touch input is used for browsing a list, a web-page, or a document.

8. An operating system, suitable for a handheld electronic device having at least two judging modes, comprising:
a receiving module, for receiving a touch input;
an executing module, for determining a judging mode out of the judging modes according to a parameter related to the touch input;
a calculating module, for calculating a deviation value between the touch input and a reference signal; and
a judging module, for judging whether the deviation value is smaller than a deviation threshold corresponding to the determined judging mode;
wherein when the judging module judges the deviation value is smaller than the deviation threshold, the executing module executes an operation corresponding to the touch input.

9. The operating system of claim 8, wherein when the judging module judges the deviation value is larger than the deviation threshold, the executing module ignores the touch input.

10. The operating system of claim 8, wherein when the judging module judges the deviation value is larger than the deviation threshold, the executing module executes another operation corresponding to the touch input.

11. The operating system of claim 8, wherein the executing module ignores the deviation threshold in the determined judging mode.

12. The operating system of claim 8, wherein the reference signal is a vertical line, the parameter is a lasting time of the touch input, and the deviation value is a horizontal distance between the touch input and the vertical line.

13. The operating system of claim 8, wherein the reference signal is a vertical line, the parameter is a lasting time of the touch input, and the deviation value is an angle between the tangent of the touch input and the vertical line.

14. The operating system of claim 8, wherein the touch input is used for browsing a list, a web-page, or a document.

15. A storage medium used for storing a computer program, said computer program comprising a plurality of codes used for being loaded into a handheld electronic device and enabling the handheld electronic device to execute the operating method of claim 1.
